(19) Europäisches Patentamt
European Patent Office
Office européen des brevets

(11) **EP 4 003 756 B1**

(12) **FASCICULE DE BREVET EUROPEEN**

(45) Date de publication et mention
de la délivrance du brevet:
**17.09.2025 Bulletin 2025/38**

(21) Numéro de dépôt: **20754002.2**

(22) Date de dépôt: **21.07.2020**

(51) Classification Internationale des Brevets (IPC):
**B60C 1/00** *(2006.01)* **C08L 7/02** *(2006.01)*

(52) Classification Coopérative des Brevets (CPC):
(C-Sets disponibles)
**B60C 1/00; C08L 7/02** (Cont.)

(86) Numéro de dépôt international:
**PCT/FR2020/051312**

(87) Numéro de publication internationale:
**WO 2021/019150 (04.02.2021 Gazette 2021/05)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2019 FR 1908496**

(43) Date de publication de la demande:
**01.06.2022 Bulletin 2022/22**

(73) Titulaire: **COMPAGNIE GENERALE DES ETABLISSEMENTS MICHELIN**
**63000 Clermont-Ferrand (FR)**

(72) Inventeurs:
• **LAGARDE, Patricia**
**63040 CLERMONT-FERRAND Cedex 9 (FR)**
• **RIOU, Aline**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2012/080111 WO-A1-2013/060857
WO-A1-2016/096559**

(52) Classification Coopérative des Brevets (CPC):
(Cont.)

C-Sets
**C08L 7/02, C08L 57/02, C08K 3/04, C08K 3/36,
C08K 5/548, C08K 3/22, C08K 5/09, C08K 3/06,
C08K 5/47, C08K 3/11**

**Description**

Le domaine de la présente invention est celui des compositions de caoutchouc à base d'élastomères diéniques, de charges renforçantes et de sels organiques de cobalt ; ces compositions de caoutchouc étant notamment destinées à la fabrication de produits renforcés et à la fabrication de pneumatiques.

Les compositions de caoutchouc à base d'élastomères diéniques, de noir de carbone et de sels organiques de cobalt sont utilisées habituellement dans des articles en caoutchouc tels que les pneumatiques, les bandes transporteuses, les courroies de transmission car elles présentent un bon pouvoir collant aux éléments métalliques présents dans ces articles. Dans les pneumatiques, ces compositions de caoutchouc entrent notamment dans la constitution de différentes couches internes telles que des nappes renforcées et peuvent être aussi appelées composition d'enrobage.

En particulier, il est connu que les différentes nappes renforcées constituant notamment la ceinture des pneumatiques radiaux comprennent des renforts métalliques sous formes de câbles d'acier constitués de fils fins assemblés entre eux par câblage ou retordage ; ces renforts métalliques étant recouverts en surface de laiton.

Pour remplir efficacement leur fonction de renforcement des ceintures de pneumatiques radiaux, soumises comme on le sait à des contraintes très importantes lors du roulage des pneumatiques, ces câbles d'acier doivent satisfaire à un très grand nombre de critères techniques, parfois contradictoires, tels qu'une haute endurance en compression, une résistance élevée à la traction, à l'usure et à la corrosion, une forte adhésion au caoutchouc environnant, et être capables de maintenir ces performances à un niveau très élevé aussi longtemps que possible. On comprend aisément que l'interphase adhésive entre le caoutchouc et le métal joue un rôle prépondérant dans la pérennité de ces performances.

L'adhésion entre la composition de caoutchouc et les éléments de renforcement métalliques se crée via le phénomène de sulfuration de la surface métallique, notamment laitonnée, du câble. Cependant, la composition de caoutchouc, tout comme les liaisons crées, peut évoluer sous l'effet de l'humidité, de la température ou d'éléments corrosifs et de leurs effets conjugués, par exemple l'effet conjugué de l'oxydation et de la chaleur (thermo-oxydation) rencontré dans les pneumatiques. À terme, ces effets peuvent entrainer l'apparition de fissures dans ces compositions de caoutchouc pouvant conduire à la séparation des différentes nappes constituant la ceinture du pneumatique. Il est donc important que la composition de caoutchouc des produits renforcés présente une bonne résistance à la fissuration et présente une bonne adhésion à l'élément de renfort en acier.

Par ailleurs, cette composition de caoutchouc doit également présenter une bonne cohésion tout en ayant une hystérèse la plus basse possible pour obtenir une diminution de la résistance au roulement.

On connait de l'état de la technique des compositions de caoutchouc qui répondent aux critères énumérés ci-dessus. Ces compositions comprennent un élastomère diénique, notamment du caoutchouc naturel, du noir de carbone, un sel organique de cobalt et un système de vulcanisation comprenant du soufre, de l'oxyde de zinc, de l'acide stéarique et des accélérateurs de vulcanisation.

Cependant, les concepteurs de pneumatiques sont constamment à la recherche de solutions permettant de faire évoluer le compromis de propriétés de ces compositions d'enrobage existant en améliorant au moins une propriété sans pénaliser les autres.

En particulier, de nos jours, compte tenu que les économies de carburant et la nécessité de préserver l'environnement sont devenues une priorité, il est souhaitable de produire des compositions de caoutchouc possédant une hystérèse aussi faible que possible.

Pour atteindre l'objectif de baisse d'hystérèse, de nombreuses solutions ont été déjà expérimentées. En particulier, on peut citer diminution de la quantité de charges renforçantes dans les compositions de caoutchouc. Toutefois, cette diminution du taux de charges renforçantes s'accompagne d'une dégradation de la cohésion des compositions de caoutchouc.

Au vu de ce qui précède, il existe donc toujours un besoin de fournir des compositions de caoutchouc notamment pour des produits renforcés qui satisfassent un compromis de propriétés complexes et acceptables en particulier pour un usage en pneumatique.

C'est pourquoi, un but de la présente invention est de fournir une composition de caoutchouc, notamment pour un produit renforcé, présentant une résistance à la fissuration améliorée tout en ayant des propriétés d'hystérèses acceptables et sans que soient dégradées ses propriétés d'adhésion et de cohésion.

Poursuivant ses recherches, le déposant a découvert que l'ajout d'une charge inorganique renforçante et d'une résine plastifiante dans une composition de caoutchouc à base d'un élastomère diénique, de noir de carbone et de sel de cobalt présentant une bonne dispersion de la charge renforçante dans sa matrice élastomérique permet, de manière surprenante, d'améliorer de manière significative la résistance à la fissuration et la cohésion de cette composition de caoutchouc sans dégrader ses propriétés d'adhésion et son hystérèse.

Ainsi, un objet de la présente invention concerne une composition de caoutchouc, notamment pour un produit renforcé, à base d'au moins une matrice élastomérique comprenant au moins un élastomère diénique, au moins une charge renforçante comprenant majoritairement du noir de carbone et au moins une charge inorganique renforçante, au moins une résine plastifiante ayant une température de transition vitreuse supérieure ou égale à 20°C, au moins un sel de cobalt et au moins un système de vulcanisation, ladite composition de caoutchouc présentant une note Z de dispersion de la charge renforçante dans la matrice élastomèrique supérieure ou égale à 85, de préférence supérieure ou égale à 90.

Un autre objet de la présente invention concerne un produit renforcé comprenant au moins un élément de renfort en acier revêtu au moins en partie par un revêtement métallique et une composition de caoutchouc telle que définie ci-dessus, ledit élément de renfort étant noyé dans ladite composition de caoutchouc.

Un autre objet de la présente invention concerne un pneumatique comprenant au moins une composition de caoutchouc telle que définie précédemment ou comprenant au moins au moins un produit renforcé tel que défini précédemment.

Dans la présente description, sauf indication expresse différente, tous les pourcentages (%) indiqués sont des % en masse.

L'abréviation « pce » (usuellement « phr » en anglais) signifie parties en poids pour cent parties d'élastomère ou caoutchouc (du total des élastomères si plusieurs élastomères sont présents). On notera que dans la notion de pce « parties en poids pour cent parties d'élastomère », est pris en considération l'ensemble de tous les élastomères présents dans la composition finale.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par l'expression « composition à base de » il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. À titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type. Les mots « majoritairement » et « majoritaire » sont synonymes et équivalents. Les mots « minoritaire » et « minoritairement » sont synonymes et équivalents.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Comme vu précédemment, la composition de caoutchouc de la présente invention, notamment pour un produit renforcé, est à base d'au moins une matrice élastomérique comprenant au moins un élastomère diénique, au moins une charge renforçante comprenant majoritairement du noir de carbone et au moins une charge inorganique renforçante, au moins un sel de cobalt, au moins une résine plastifiante ayant une température de transition vitreuse supérieure ou égale à 20°C et au moins un système de vulcanisation, ladite composition de caoutchouc présentant une note Z de dispersion de la charge renforçante dans la matrice élastomèrique supérieure ou égale à 85, de préférence supérieure ou égale à 90.

La composition de caoutchouc de l'invention comprend au moins une matrice élastomèrique comprenant au moins un élastomère diénique.

Par « matrice élastomérique » au sens de la présente invention, on entend l'ensemble des élastomères (caoutchoucs) de la composition de caoutchouc. Ainsi, la matrice élastomérique peut notamment être constituée d'un seul élastomère mais aussi d'un coupage de deux ou plusieurs élastomères.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % en moles). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50 % en moles.

On entend plus particulièrement par élastomère diénique susceptible d'être utilisé dans le cadre de la présente invention :

- tout homopolymère d'un monomère diène, conjugué ou non, ayant de 4 à 12 atomes de carbone;
- tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le butadiène-1,3, le 2-méthyl-1,3-butadiène (ou isoprène).

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent, par exemple, le styrène, l'ortho-, méta-, para-méthylstyrène, le mélange commercial « vinyle-toluène », le para-tertiobutylstyrène.

A titre d'α-monooléfines aliphatiques conviennent notamment les α-monooléfines aliphatiques acycliques ayant de 3 à 18 atomes de carbone.

Plus particulièrement, l'élastomère diénique est :

- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- tout copolymère obtenu par copolymérisation d'un ou plusieurs diènes, conjugués ou non, avec l'éthylène, une α-monooléfine ou leur mélange comme par exemple les élastomères obtenus à partir d'éthylène, de propylène avec un monomère diène non conjugué du type précité.

L'élastomère diénique utilisable dans le cadre de la présente invention peut donc être un caoutchouc naturel ou un élastomère diénique synthétique.

Les élastomères diéniques synthétiques peuvent avoir toute microstructure qui est fonction des conditions de polymérisation utilisées, notamment de la présence ou non d'un agent modifiant et/ou randomisant et des quantités d'agent modifiant et/ou randomisant employées. Ces élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés. Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplé et/ou étoilé à l'étain (décrit dans WO 11/042507), ce dernier représentant un taux compris de 5 à 50 %, par exemple de 25 à 50 %.

A titre d'élastomères diéniques utilisables dans le cadre de la présente invention, conviennent les polybutadiènes et en particulier ceux ayant une teneur (% molaire) en unités -1,2 comprise entre 4 % et 80 % ou ceux ayant une teneur (% molaire) en cis-1,4 supérieure à 80 %, les polyisoprènes, les copolymères de butadiène-styrène et en particulier ceux ayant une Tg (température de transition vitreuse (Tg, mesurée selon ASTM D3418-1999) comprise entre 0°C et -90°C et plus particulièrement entre -10°C et -70°C, une teneur en styrène comprise entre 1 % et 60 % en poids et plus particulièrement entre 20 % et 50 %, une teneur (% molaire) en liaisons -1,2 de la partie butadiénique comprise entre 4 % et 75 %, une teneur (% molaire) en liaisons trans-1,4 comprise entre 10 % et 80 %, les copolymères de butadiène-isoprène et notamment ceux ayant une teneur en isoprène comprise entre 5 % et 90 % en poids et une Tg de -40°C à -80°C, les copolymères isoprène-styrène et notamment ceux ayant une teneur en styrène comprise entre 5 % et 50 % en poids et une Tg comprise entre -5 C et -50°C. Dans le cas des copolymères de butadiène-styrène-isoprène conviennent notamment ceux ayant une teneur en styrène comprise entre 5 % et 50 % en poids et plus particulièrement comprise entre 10 % et 40 %, une teneur en isoprène comprise entre 15 % et 60 % en poids et plus particulièrement entre 20 % et 50 %, une teneur en butadiène comprise entre 5 % et 50 % en poids et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre - 5°C et - 70°C.

Préférentiellement, le ou les élastomères diéniques utilisables dans le cadre de la présente invention sont choisis préférentiellement dans le groupe constitué par les polybutadiènes (en abrégé BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces polymères.

Plus préférentiellement encore, le ou les élastomères diéniques utilisables dans le cadre de la présente invention sont choisis préférentiellement dans le groupe constitué par le caoutchouc naturel, les polyisoprènes de synthèse et les mélanges de ces élastomères.

La composition selon l'invention comprend au moins une charge renforçante comprenant majoritairement de noir de carbone et au moins une charge inorganique renforçante. La charge renforçante est donc un coupage d'un noir de carbone et d'une charge inorganique renforçante dans lequel le noir de carbone est majoritaire et la charge inorganique renforçante est minoritaire.

Les charges renforçantes sont connues pour leurs capacités à renforcer une composition de caoutchouc utilisable pour la fabrication de pneumatiques.

Par « une charge renforçante constituée majoritairement de noir de carbone » ou par « noir de carbone est majoritaire » on entend au sens de la présente invention, que le noir de carbone représente la plus grande quantité en masse ou en poids des charges renforçantes de la composition de caoutchouc. En d'autres termes, la masse du noir de carbone est strictement supérieure à 50 % de la masse totale, préférentiellement supérieure à 60% de la masse totale des charges renforçantes dans la composition de caoutchouc.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés.

De préférence, le noir de carbone présente un indice d'absorption d'huile d'échantillons comprimés (COAN) supérieur ou égal à 60 ml/100 g, de préférence un indice COAN compris dans un domaine allant de 65 à 130 ml/100 g, Le COAN, ou indice d'absorption d'huile par des d'échantillons comprimés (« Compressed Oil Absorption Number » en anglais) des noir de carbone est mesuré selon la norme ASTM D3493-2016.

De préférence, le noir de carbone présente une surface spécifique BET supérieure ou égale à 30 m$^2$/g ; de préférence supérieur ou égale à 60 m$^2$/g, plus préférentiellement encore comprise dans un domaine allant de 60 à 150 m$^2$/g. La surface spécifique BET du noir de carbone est mesurée selon la norme D6556-2010 [méthode multipoints (au minimum 5 points) - gaz : azote - domaine de pression relative P/P0 : 0.1 à 0.3].

Plus préférentiellement encore, le noir de carbone présente un indice d'absorption d'huile d'échantillons comprimés (COAN) compris dans un domaine allant de 65 à 130 ml/100 g et une surface spécifique BET comprise dans un domaine allant de 60 à 150 m$^2$/g.

Le taux de noir de carbone peut être compris dans un domaine allant de 10 à 80 pce. En dessous de 10 pce, il a été observé que la rigidité de la composition de caoutchouc commence à ne plus être suffisante, impactant négativement l'endurance, alors qu'au-delà de 80 pce, les performances de résistance au roulement commencent à se dégrader. Avantageusement, le taux de noir de carbone est compris dans un domaine allant de 30 à 70 pce, encore plus préférentiellement de 35 à 65 pce.

La composition de caoutchouc de l'invention comprend comme charge renforçante, en plus du noir de carbone, au moins une charge inorganique renforçante. Cette charge inorganique renforçante est minoritaire par rapport au noir de carbone, c'est-à-dire qu'elle ne représente pas la fraction massique la plus grande parmi les charges renforçantes. En d'autres termes, la masse de la charge inorganique renforçante est strictement inférieure à 50 % de la masse totale, préférentiellement inférieure à 40 % de la masse totale des charges renforçantes dans la composition de caoutchouc.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes

**6**

hydroxyle (-OH) à leur surface.

Comme charges inorganiques renforçantes conviennent notamment des charges minérales du type siliceux, préférentiellement la silice ($SiO_2$), ou du type alumineux, en particulier l'alumine ($Al_2O_3$).

Préférentiellement, la charge inorganique renforçante comprend une silice. Plus préférentiellement encore, la charge renforçante inorganique consiste, notamment essentiellement, en de la silice.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2$/g, de préférence comprises dans un domaine allant de 30 à 400 $m^2$/g, notamment de 60 à 300 $m^2$/g.

Dans le présent exposé, la surface spécifique BET de la charge inorganique renforçante est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques renforçante telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu, on entend également par charge inorganique renforçante des mélanges de différentes charges inorganiques renforçantes, en particulier des mélanges de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack® » de la série CRX2000 » ou de la série « CRX4000 » de la société Cabot Corporation.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. De manière connue, le taux d'agent de couplage de la charge inorganique renforçante avec l'élastomère diénique peut représenter préférentiellement de 0,5 % à 15 % en poids par rapport à la quantité de charge inorganique renforçante.

A titre d'agent de couplage de la charge inorganique renforçante avec l'élastomère diénique, on utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

Le taux de charge inorganique renforçante de la composition de caoutchouc peut être inférieur ou égal à 50 pce, de préférence est compris dans un domaine allant de 0,5 pce à 50 pce. En dessous de 0,5 pce, il a été observé que l'adhésion de la composition de caoutchouc commence à ne plus être suffisante, alors qu'au-delà de 50 pce, les performances de résistance au roulement commencent à se dégrader. Avantageusement, ce taux est compris dans un domaine allant de 2 à 40 pce, plus préférentiellement encore de 4 à 25 pce.

De manière préférentielle, le taux de charge renforçante totale (noir de carbone et charge inorganique renforçante) est compris dans un domaine allant de 20 à 130 pce, plus préférentiellement est compris dans un domaine allant de 30 à 120 pce, plus préférentiellement encore dans un domaine allant de 30 à 95 pce.

Selon un mode de réalisation préféré de l'invention, le taux de noir de carbone est compris dans un domaine allant de 30 à 70 pce et le taux de la charge inorganique renforçante est compris dans un domaine allant de 2 à 40 pce.

Selon un mode de réalisation préféré de l'invention, le taux de noir de carbone est compris dans un domaine allant de 30 à 70 pce et le taux de la charge inorganique renforçante est compris dans un domaine allant de 4 à 25 pce.

Selon un autre mode de réalisation préféré de l'invention, le taux de noir de carbone est compris dans un domaine allant de 35 à 65 pce et le taux de la charge inorganique renforçante est compris dans un domaine allant de 2 à 40 pce.

Selon un autre mode de réalisation de l'invention, le taux de noir de carbone est compris dans un domaine allant de 35 à 65 pce et le taux de la charge inorganique renforçante est compris dans un domaine allant de 4 à 25 pce.

Comme vu précédemment la composition de caoutchouc de l'invention comprend une résine plastifiante ayant une température de transition vitreuse (Tg) supérieure ou égale à 20°C, aussi appelée résine plastifiante haute Tg. La Tg est mesurée selon la norme ASTM D3418 (1999).

Une résine hydrocarbonée de haute Tg est, par définition un solide, à température et pression ambiante (20°C, 1 atm).

Les résines plastifiantes, appelées aussi résines plastifiantes hydrocarbonées, sont des polymères bien connus de l'homme du métier utilisables en particulier comme agents plastifiants ou agents tackifiants dans des matrices polymériques. Elles sont essentiellement à base de carbone et hydrogène mais peuvent comporter d'autres types d'atomes, par exemple l'oxygène. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »). De manière connue, ces résines hydrocarbonées peuvent être qualifiées aussi de résines thermoplastiques en ce sens qu'elles se ramollissent par chauffage et peuvent ainsi être moulées.

Préférentiellement, la résine plastifiante de haute Tg présente une température de ramollissement inférieure ou égale à 170°C, plus préférentiellement inférieure ou égale à 140°C. Le point de ramollissement des résines hydrocarbonées est mesuré selon la norme ISO 4625-2004 (méthode « Ring and Ball »).

Les résines plastifiantes de haute Tg peuvent être aliphatiques, ou aromatiques ou encore du type aliphatique/aromatique c'est-à-dire à base de monomères aliphatiques et/ou aromatiques et les mélanges de ces résines. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'indène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante de haute Tg est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines.

Le terme « terpène » regroupe ici de manière connue les monomères alpha-pinène, betapinène et limonène ; le monomère limonène se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Plus préférentiellement encore, la résine plastifiante de haute Tg est choisie dans le groupe constitué par les résines d'homopolymères ou copolymères de cyclopentadiène ou dicyclopentadiène, les résines d'homopolymères ou copolymères de coupe C5 (notamment les résines de copolymères coupe C5/ vinylaromatique) les résines d'homopolymères ou copolymères de coupe C9 et les mélanges de ces résines.

Plus préférentiellement encore, la résine plastifiante de haute Tg est une résine de copolymères coupe C5/ vinylaromatique.

De préférence, la résine plastifiante de haute Tg présente au moins une quelconque des caractéristiques suivantes :

- une température de transition vitreuse supérieure ou égale à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante de haute Tg présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé (« WATERS EMPOWER »).

Les résines plastifiantes de haute Tg préférentielles ci-dessus sont bien connues de l'homme du métier et disponibles commercialement, par exemple vendues en ce qui concerne les :

- résines polylimonène : par la société DRT sous la dénomination « Dercolyte L120 » (Mn=625 g/mol ; Mw=1010 g/mol ; Ip=1,6 ; Tg=72°C) ou par la société ARIZONA sous la dénomination « Sylvagum TR7125C » (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations « Super Nevtac 78 », « Super Nevtac 85 » ou « Super Nevtac 99 », par Goodyear Chemicals sous dénomination « Wingtack Extra », par Kolon sous dénominations « Hikorez T1095 » et « Hikorez T1100 », par Exxon sous dénominations « Escorez 2101 » et « Escorez 1273 » ;
- résines de copolymère limonène/ styrène : par DRT sous dénomination « Dercolyte TS 105 »" de la société DRT, par ARIZONA Chemical Company sous dénominations « ZT115LT » et « ZT5100 ».

A titre d'exemples d'autres résines plastifiantes préférentielles, on peut citer également les résines alpha-méthyl-styrène modifiées phénol. Pour caractériser ces résines modifiées phénol, on rappelle qu'il est utilisé de manière connue un indice dit « indice hydroxyle » (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations « Sylvares SA 100 » (Mn = 660 g/mol ; Ip = 1,5 ; Tg = 53°C) ; « Sylvares SA 120 » (Mn = 1030 g/mol ; Ip = 1,9 ; Tg = 64°C) ; « Sylvares 540 » (Mn = 620 g/mol ; Ip = 1,3 ; Tg = 36°C ; indice d'hydroxyle = 56 mg KOH/g) ; « Silvares 600 » (Mn = 850 g/mol ; Ip = 1,4 ; Tg = 50°C ; indice d'hydroxyle = 31 mg KOH/g).

Le taux de résine plastifiante de haute Tg dans la composition de caoutchouc peut être compris dans un domaine allant de 0,5 à 20 pce, de préférence de 2 à 12 pce, plus préférentiellement encore de 3 à 10 pce.

La composition de caoutchouc comprend également un sel de cobalt, de préférence un sel organique de cobalt.

Le taux du sel de cobalt peut être par exemple compris dans un domaine allant de 0,1 pce à 6 pce, de préférence allant de 0,5 pce à 5 pce, plus préférentiellement encore allant de 0,6 pce à 3 pce.

Préférentiellement, le sel de cobalt est choisi dans le groupe constitué par les abiétates de cobalt, les acétylacétonates de cobalt, les tallates de cobalt, les naphténates de cobalt, les résinâtes de cobalt et les mélanges de ces sels de cobalt.

Le système de vulcanisation de la composition de caoutchouc utilisé dans le cadre de la présente invention est à base de soufre (ou d'un agent donneur de soufre).

Le soufre peut être utilisé à un taux préférentiel qui est inférieur ou égal à 10 pce, de préférence compris dans un domaine allant de 0,5 à 7 pce, plus préférentiellement est compris dans un domaine allant de 0,75 pce à 5,5 pce. En dessous, de 0,5 pce, la composition de caoutchouc pourrait ne pas être suffisamment vulcanisée pour son utilisation notamment dans un produit renforcé tandis qu'au-delà de 10 pce, la composition pourrait présenter une moindre résistance à la thermo-oxydation.

A ce système de vulcanisation de base peuvent venir s'ajouter, incorporés au cours de la première phase non-productive et/ou au cours de la phase productive telles que décrites ultérieurement, divers accélérateurs ou activateurs de vulcanisation connus tels que décrits ci-dessous.

A titre d'activateurs de vulcanisation utilisables dans le cadre de l'invention, on peut citer, par exemple l'oxyde de zinc, l'acide stéarique ou des composés équivalents tels que les sels d'acide stéarique et sels de métaux de transition, dérivés guanidiques (en particulier diphénylguanidine), ou encore des retardateurs de vulcanisation connus.

En particulier, on peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé « MBTS »), N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBSI »), disulfure de tetrabenzylthiurame (« TBZTD »), dibenzyldithiocarbamate de zinc (« ZBEC ») et les mélanges de ces composés.

La composition de caoutchouc selon l'invention peut comporter optionnellement également tout ou partie des additifs usuels habituellement utilisés dans les compositions de caoutchouc destinées notamment à la fabrication de pneumatiques, comme par exemple des pigments, des agents de protection tels que cires anti-ozone, anti-ozonants chimiques, anti-oxydants, des huiles plastifiantes, des résines renforçantes, des agents anti-réversion (par exemple les sels de hexaméthylène 1,6-bisthiosulphate ou le 1,3-bis(citracoimidométhyl)benzène), des accepteurs (par exemple résine phénolique novolaque) ou des donneurs de méthylène (par exemple HMT ou H3M).

Les compositions de caoutchouc selon l'invention peuvent également comprendre en outre un deuxième sel minéral différent du sel de cobalt. Préférentiellement, ce sel minéral différent du sel de cobalt est choisi dans le groupe constitué par les sels d'un métal alcalino-terreux, les sels d'un métal alcalin, les sels de lanthanides et les mélanges de ces sels minéraux. Plus préférentiellement encore, ce sel minéral différent du sel de cobalt est choisi dans le groupe constitué par un acétylacétonate d'un métal alcalino-terreux, acétylacétonate d'un métal alcalin, un acétylacétonate d'un métal lanthanide.

La composition de caoutchouc de l'invention présente une note Z de dispersion de la charge renforçante dans la matrice élastomèrique de la composition supérieure ou égale à 85, de préférence supérieure ou égale à 90.

Il existe de nombreuses méthodes pour disposer d'une composition de caoutchouc présentant une bonne dispersion de la charge renforçante dans la matrice élastomérique.

De manière générale, pour qu'une charge renforçante soit bien dispersée, dans la matrice élastomérique de la composition de caoutchouc, il convient que cette charge renforçante soit présente dans la matrice élastomèrique de la composition sous une forme finale qui soit à la fois la plus finement divisée possible et répartie de la façon la plus homogène possible.

Pour obtenir une composition de caoutchouc présentant une bonne dispersion de la charge renforçante, on peut citer par exemple, les techniques de mélangeage par voie massique des différents constituants de la composition de caoutchouc.

Une autre solution pour obtenir de telle composition de caoutchouc présentant une bonne dispersion de la charge renforçante consiste à utiliser un mélange maître d'élastomère diénique et de noir de carbone. Par « mélange maître » (ou « masterbatch » en anglais), on entend un composite à base d'élastomère diénique dans lequel a été introduit une charge et éventuellement d'autres additifs.

Préférentiellement, la composition de caoutchouc utilisée dans le cadre de la présente invention est obtenue à partir d'un mélange maître comprenant au moins l'élastomère diénique et le noir de carbone auquel on incorpore ensuite, notamment dans un mélangeur interne, la charge inorganique renforçante minoritaire, la résine plastifiante haute Tg, le sel de cobalt et les autres constituants éventuels de la composition de caoutchouc à l'exception du système de vulcanisation en malaxant thermomécaniquement ce mélange jusqu'à atteindre une température maximale comprise dans un domaine allant de 130°C à 200°C. Une fois ce mélange refroidi à une température inférieure à 100°C, on incorpore ensuite le système de vulcanisation et on malaxe jusqu'à une température maximale inférieure à 100°C.

Plus préférentiellement encore, ledit mélange-maître est obtenu par mélangeage en phase liquide à partir d'une dispersion aqueuse de noir de carbone, c'est-à-dire une charge dispersée dans de l'eau, couramment appelée « slurry », et d'un latex d'élastomère diénique. Le latex d'élastomère diénique est une forme particulière de l'élastomère diénique qui se présente sous forme de particules d'élastomère diénique dispersées dans l'eau.

Ainsi pour l'obtention de la composition de caoutchouc utilisable dans le cadre de la présente invention, on utilisera donc préférentiellement les latex d'élastomères diéniques, les élastomères diéniques étant ceux définis précédemment.

A titre de latex de caoutchouc naturel (NR) qui convient particulièrement à l'invention, on pourra se référer au chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

Plus particulièrement, plusieurs formes de latex de caoutchouc naturel sont commercialisées : les latex de caoutchouc naturel dits « de champ » (« latex field »), les latex de caoutchouc naturel dits « concentrés » (« concentrated natural rubber latex »), les latex époxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite : « HA » (« high ammonia ») et de qualité dite « LA » (« low ammonia »); on utilisera avantageusement pour l'invention des latex de caoutchouc naturel concentrés de qualité HA.

Le latex de caoutchouc naturel peut être utilisé directement ou être préalablement dilué dans de l'eau pour faciliter sa mise en œuvre.

Ainsi à titre de latex d'élastomère diénique synthétique, le latex peut notamment consister en un élastomère diénique synthétique déjà disponible sous forme d'émulsion (par exemple un polybutadiène ou un copolymère de butadiène et de styrène, SBR, préparé en émulsion), ou en un élastomère diénique synthétique initialement en solution (par exemple un SBR ou un BR préparé en solution) qui est émulsifié dans un mélange de solvant organique et d'eau, généralement au moyen d'un agent tensio-actif.

Convient particulièrement dans le cadre de la présente invention, un latex de SBR, notamment un SBR préparé en émulsion (« ESBR ») ou un SBR préparé en solution (« SSBR »), et plus particulièrement un SBR préparé en émulsion.

Il existe deux grands types de procédés de copolymérisation en émulsion du styrène et de butadiène, l'un d'entre eux, ou procédé à chaud (mis en œuvre à une température proche de 50° C), étant adapté pour la préparation de SBR très ramifiés alors que l'autre, ou procédé à froid (mis en œuvre à une température pouvant aller de 15° C à 40° C), permet d'obtenir des SBR plus linéaires.

Dans le cas d'un élastomère SBR (ESBR ou SSBR), on utilise notamment un SBR ayant une teneur en styrène moyenne, par exemple comprise entre 20 % et 35 % en poids, ou une teneur en styrène élevée, par exemple entre 35 et 45 %, une teneur en liaisons vinyliques de la partie butadiènique comprise entre 15 % et 70 %, une teneur (% molaire) en liaisons trans-1,4 comprise entre 15 % et 75 % et une Tg comprise entre - 10°C et - 55°C ; un tel SBR peut être avantageusement utilisé en mélange avec un BR possédant de préférence plus de 90 % (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

Préférentiellement le mélange maître élastomère diénique est obtenu selon les étapes de procédé suivantes :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant la dispersion aqueuse de noir de carbone sous pression dans la zone de mélange d'un réacteur de coagulation pour former un mélange coagulé (aussi appelé coagulum)
- sécher le coagulum obtenu précédemment afin de récupérer le premier mélange maitre

Les étapes de ce procédé ainsi que le réacteur de coagulation sont décrites en détail dans le document US6929783B2, notamment aux colonnes 16 à 18. Le procédé en particulier, tel que décrit dans ce document permet d'obtenir un mélange maître d'élastomère diénique et de noir de carbone présentant une très bonne dispersion du noir de carbone dans l'élastomère diénique. Ce procédé consiste notamment à incorporer un flux continu d'un premier fluide constitué par un latex d'élastomère diénique dans la zone de mélangeage d'un réacteur de coagulation, à incorporer un deuxième flux continu d'un deuxième fluide constitué par une dispersion aqueuse de noir de carbone sous pression dans la zone de mélangeage pour former un mélange avec le latex d'élastomère ; le mélangeage de ces deux fluides étant suffisamment énergétique pour permettre de coaguler quasiment complètement le latex d'élastomère avec le noir de carbone avant l'orifice de sortie du réacteur de coagulation puis à sécher le coagulum obtenu pour obtenir le mélange maître.

Une fois le mélange maître d'élastomère diénique et de noir de carbone obtenu, on y incorpore, notamment dans un mélangeur interne, la charge inorganique renforçante minoritaire, la résine plastifiante haute Tg, le sel de cobalt et les éventuels autres constituant de la composition de caoutchouc à l'exception du système de vulcanisation et on conduit une première phase de travail ou de malaxage thermo-mécanique jusqu'à une température maximale comprise dans un domaine allant de 130°C à 200°C. Cette première étape de mélange dans le mélangeur interne est qualifiée de phase « non-productive ». La durée totale du malaxage, dans cette phase non productive est, de préférence, comprise dans un domaine allant de 1 à 15 min.

Après refroidissement du mélange ainsi obtenu au cours de cette première phase non productive, on incorpore alors le système de vulcanisation à basse température, généralement dans un mélangeur externe tel qu'un mélangeur à cylindres. C'est la phase qualifiée souvent dite « productive », qui se déroule pendant quelques minutes, par exemple entre 2 et 15 min, et à une température typiquement inférieure à 120°C, de préférence dans un domaine allant 60°C à 100°C.

La composition de caoutchouc finale ainsi obtenue est ensuite calandrée par exemple sous la forme d'une feuille ou d'une plaque, notamment pour une caractérisation au laboratoire, ou encore calandrée ou extrudée sous la forme d'une feuille ou d'une couche de caoutchouc utilisable pour la fabrication d'un produit renforcé selon l'invention comme décrit ci-dessous ou pour la fabrication d'une couche interne dans un pneumatique.

La réticulation (ou cuisson) est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

De préférence, la composition de caoutchouc peut être utilisée dans le pneumatique sous la forme d'une couche, notamment sous la forme d'une couche interne. Par couche, on entend tout élément tridimensionnel, de forme et d'épaisseur quelconques, notamment en feuille, bande ou autre élément de section droite quelconque, par exemple rectangulaire ou triangulaire.

Un autre objet de la présente invention concerne un produit renforcé comprenant au moins un élément de renfort en acier revêtu au moins en partie par un revêtement métallique et une composition de caoutchouc telle que définie ci-dessus, ledit élément de renfort étant noyé dans ladite composition de caoutchouc

Par « élément de renfort en acier », on entend un élément, constitué majoritairement (c'est à dire pour plus de 50 % de sa masse) ou intégralement (pour 100 % de sa masse), d'acier permettant le renforcement mécanique d'une composition de caoutchouc dans laquelle cet élément de renfort est destiné à être noyé.

L'élément de renfort en acier peut comprendre, dans un mode de réalisation, un unique élément de renfort filaire, aussi appelé monofilament élémentaire, dont l'âme est en acier.

Par « élément de renfort filaire », on entend un élément longiligne de grande longueur relativement à sa section transversale, quelle que soit la forme de cette dernière, par exemple circulaire, elliptique, oblongue, polygonale, notamment rectangulaire, carrée ou ovale. Dans le cas d'une section rectangulaire, l'élément filaire présente la forme d'une bande. Lorsqu'il est de forme circulaire, le diamètre de l'élément de renfort filaire est de préférence inférieur à 5 mm, plus préférentiellement compris dans un domaine allant de 0,05 à 2 mm.

L'élément de renfort filaire en acier peut être rectiligne comme non rectiligne, par exemple torsadé ou ondulé. L'élément de renfort filaire peut également être sous forme de feuillards ou de bandes qui présentent une grande longueur par rapport à leur épaisseur.

L'élément de renfort filaire en acier peut présenter une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la composition de caoutchouc dans laquelle l'élément de renfort est destiné à être noyé et un allègement de la composition de caoutchouc ainsi renforcée.

Dans un autre mode de réalisation, l'élément de renfort en acier peut comprendre un assemblage de plusieurs monofilaments élémentaires en acier (ou plusieurs éléments de renforts filaires en acier) tels que décrits ci-dessus, assemblés ensemble en hélice, par exemple par câblage ou retordage des monofilaments élémentaires en acier pour former, par exemple des câbles à couches comprenant plusieurs couches concentriques de monofilaments élémentaires en acier ou des câbles à torons, chaque toron comprenant plusieurs couches concentriques de monofilaments élémentaires en acier.

L'âme en acier de l'élément de renfort est monolithique, c'est-à-dire qu'elle est, par exemple, venue de matière ou de moulage.

L'acier peut présenter une microstructure perlitique, ferritique, austénitique, bainitique, martensitique ou une microstructure issue d'un mélange de ces microstructures.

De préférence, l'acier est un acier perlitique au carbone dénommé de manière connue « acier au carbone ». En particulier, lorsqu'un acier au carbone est utilisé, sa teneur en carbone est de préférence comprise dans un domaine allant de 0,1 % à 1,2 % en masse et plus préférentiellement de 0,3 % à 1,1 % en masse par rapport à la masse d'acier.

On peut également utiliser un acier dit « acier dit inoxydable », cet acier comprenant au moins 0,5 % en masse, de préférence au moins 5 % en masse et plus préférentiellement au moins 15 % en masse de chrome par rapport à la masse d'acier.

Par « élément de renfort en acier revêtu en partie par un revêtement métallique », on entend que l'élément de renfort filaire en acier est directement recouvert au moins sur une partie de l'âme en acier par un revêtement métallique. Le revêtement métallique favorise l'adhésion de l'élément de renfort à la composition de caoutchouc dans lequel il est noyé.

Préférentiellement, le revêtement métallique recouvre la totalité de l'âme en acier de l'élément de renfort. Ce revêtement métallique peut être réalisé dans un métal identique ou différent de l'acier, de préférence le métal du revêtement est différent de l'acier.

Préférentiellement, le revêtement métallique comprend un métal choisi parmi le zinc, le cuivre, l'étain, le cobalt et les alliages de ces métaux. Comme exemples d'alliages de ces métaux, on citera le laiton et le bronze. Préférentiellement, le revêtement métallique est un alliage de métaux, plus préférentiellement est en laiton.

Par « directement recouvert », on entend que le revêtement métallique est au contact de l'élément de renfort sans qu'aucun autre objet, notamment une autre couche ou un autre revêtement ne soit interposé entre l'élément de renfort et le revêtement métallique.

Le revêtement de l'élément de renfort en acier s'effectue par toute technique bien connue de l'homme du métier, notamment par toute technique d'enduction connue telle que par exemple pulvérisation, imprégnation par trempage, défilement dans un bain ou autre technique équivalente de dépôt de film ou de composition mince ou ultra-mince, ou encore par combinaison d'une ou plusieurs de ces techniques.

Le produit renforcé selon l'invention peut être préparé selon un procédé comprenant au moins les étapes suivantes :

- réaliser deux couches de la composition de caoutchouc selon l'invention et telle que précédemment décrite ;
- combiner au moins une portion d'au moins un élément de renfort en acier revêtu au moins en partie par un revêtement métallique avec la composition de caoutchouc de l'étape précédente pour former un produit renforcé ;
- réticuler par cuisson, de préférence sous pression, le produit renforcé ainsi formé.

La combinaison de l'élément de renfort en acier revêtu au moins en partie par un revêtement métallique avec la composition de caoutchouc peut être effectuée par exemple en prenant le ou les éléments de renfort en sandwich dans les deux couches de la composition de caoutchouc selon l'invention en le(s) déposant entre les deux couches.

Alternativement, le produit renforcé peut être fabriqué en déposant l'élément de renfort en acier revêtu au moins en partie par un revêtement métallique sur une portion d'une couche obtenue à l'étape précédente, la couche est alors repliée sur elle-même pour couvrir le dit élément de renfort qui est alors ainsi pris en sandwich sur toute sa longueur ou une partie de sa longueur.

Le produit renforcé de l'invention est avantageusement utilisable pour le renforcement de pneumatiques. Parmi ces pneumatiques, l'invention concerne notamment des pneumatiques destinés à équiper des véhicules à moteur de type tourisme, SUV (« Sport Utility Vehicles »), deux roues (notamment vélos, motos), avions, comme des véhicules industriels choisis parmi camionnettes, « Poids-lourd » c'est-à-dire métro, bus, engins de transport routier (camions, tracteurs, remorques), véhicules hors-la-route tels qu'engins agricoles ou de génie civil, autres véhicules de transport ou de manutention. Également, le produit renforcé de l'invention peut être utilisé pour la fabrication de courroies de caoutchouc ou encore pour des bandes transporteuses telles que des tapis roulants.

Comme déjà indiqué précédemment, le produit renforcé de l'invention peut se présenter sous formes variées, sous une forme unitaire (avec un seul élément de renfort) ou encore sous la forme d'une nappe ou d'une couche, d'une bande, d'une bandelette ou d'un bloc de caoutchouc dans lesquels sont incorporés, par exemple par calandrage, plusieurs éléments de renfort en acier revêtu au moins en partie par un revêtement métallique. L'adhésion définitive entre l'élément de renfort en acier revêtu au moins en partie par un revêtement métallique et la composition de caoutchouc selon l'invention décrite ci-dessus peut être obtenue à l'issue de la cuisson, de préférence sous pression, de l'article fini auquel est destiné le produit renforcé de l'invention.

Préférentiellement, le produit renforcé est une nappe renforcée droite ou une nappe renforcée à angle.

Dans un mode de réalisation, dans lequel chaque élément de renfort est un élément filaire de renfort, on agence parallèlement les uns aux autres les éléments filaires de renfort et on les noie par exemple par calandrage dans la composition de caoutchouc précédemment décrite. On obtient alors une nappe dite droite, dans laquelle les éléments filaires de renfort de la nappe sont parallèles les uns aux autres et sont parallèles à une direction principale de la nappe. Puis, si nécessaire, on découpe des portions de chaque nappe droite selon un angle de découpe et on aboute ces portions les unes aux autres de façon à obtenir une nappe dite à angle dans laquelle les éléments filaires de renfort de la nappe sont parallèles les aux autres et forment un angle avec la direction principale de la nappe à angle, l'angle formé avec la direction principale étant alors égal à l'angle de découpe.

Le produit renforcé peut être une nappe de carcasse, une nappe sommet de travail, une nappe sommet de frettage, une nappe sommet de protection, etc.

L'invention concerne également un pneumatique comprenant au moins une composition de caoutchouc selon l'invention telle que définie ci-dessus et/ou au moins un produit renforcé tel que défini ci-dessus.

Il est possible de définir au sein du pneumatique trois types de zones :

- la zone extérieure et en contact avec l'air ambiant, cette zone étant essentiellement constituée de la bande de roulement et d'un flanc externe du pneumatique, ce flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet ;
- la zone intérieure et en contact avec le gaz de gonflage lorsque le pneumatique est monté sur une jante, cette zone étant généralement constituée par une couche étanche aux gaz de gonflage, parfois appelée couche étanche intérieure ou gomme intérieure (« inner liner » en anglais) ;
- la zone interne du pneumatique, c'est-à-dire celle comprise entre la zone extérieure et la zone intérieure. Cette zone inclut des couches ou nappes qui sont appelées ici couches internes du pneumatique. Ce sont, par exemple, des nappes carcasses, des sous-couches de bande de roulement, des nappes de ceintures de pneumatiques ou tout autre couche qui n'est pas en contact avec l'air ambiant ou le gaz de gonflage du pneumatique.

La composition de caoutchouc selon l'invention, telle que définie précédemment, est particulièrement bien adaptée aux couches internes, notamment aux couches internes renforcées ou comme couche interne adjacente à une couche interne renforcée.

Plus préférentiellement, le pneumatique de l'invention comprend au moins une composition de caoutchouc telle que définie ci-dessus. Selon un autre mode de réalisation, le pneumatique de l'invention comprend au moins un produit renforcé tel que défini précédemment ou comprend au moins composition de caoutchouc telle que définie précédemment constituant au moins une couche interne du pneumatique. Préférentiellement, cette couche interne est adjacente à un produit renforcé du pneumatique.

La couche interne adjacente à un produit renforcé du pneumatique peut être une gomme de découplage, une gomme de bordure, les bourrages-tringles ...

Bien entendu, l'invention concerne les objets précédemment décrits, à savoir la composition de caoutchouc, le produit renforcé et le pneumatique les comportant, tant à l'état cru (avant réticulation) qu'à l'état cuit (après réticulation).

L'invention sera mieux comprise à la lecture de la description qui va suivre, donnée uniquement à titre d'exemple non limitatif et faite en se référant aux dessins dans lesquels :

- la figure 1 est une coupe d'un pneumatique selon l'invention comprenant une couche interne adjacente à un produit renforcé. La figure 1 sans respect d'échelle spécifique, représente schématiquement une coupe radiale d'un pneumatique conforme à l'invention pour un véhicule du type tourisme.
- la figure 2 est une coupe schématique d'un exemple d'un produit renforcé selon l'invention formant une nappe renforcée.

Dans ce qui suit, les expressions « radialement intérieur à» et «radialement extérieur à» ou « radialement à l'extérieur » signifient respectivement « plus proche de l'axe de rotation du pneumatique, selon la direction radiale, que » et « plus éloigné de l'axe de rotation du pneumatique, selon la direction radiale, que ».

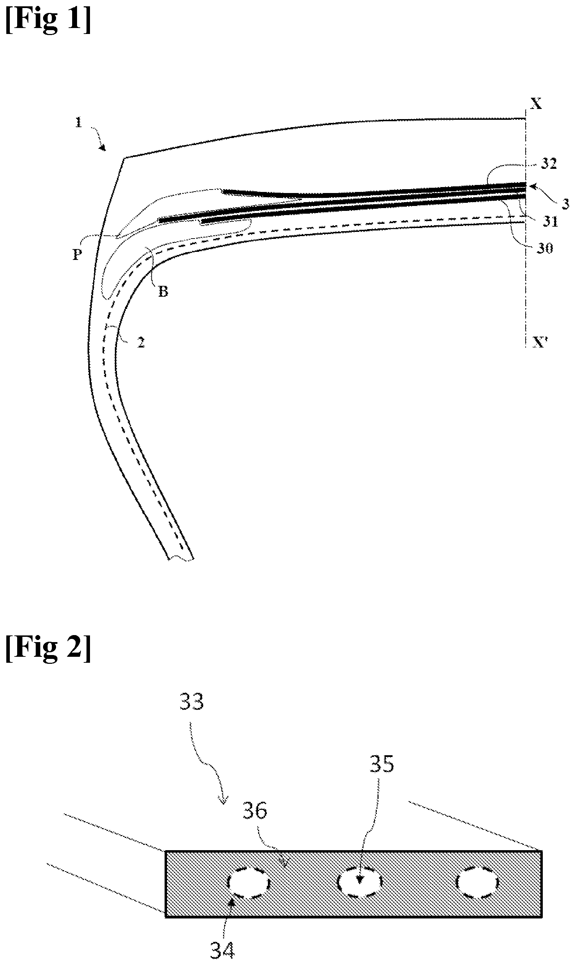

La figure 1 ne représente qu'une demi-vue d'un pneumatique qui se prolonge de manière symétrique par rapport à l'axe XX' qui représente le plan médian circonférentiel ou plan équatorial du pneumatique.

Sur la figure 1, le pneumatique 1 comprend une armature de carcasse radiale composée d'une seule nappe 2 de câbles métalliques en acier, ladite armature carcasse étant ancrée dans chaque bourrelet ; lesdits bourrelets ne sont pas représentés sur la figure 1. L'armature carcasse est radialement à l'extérieur surmontée d'une armature de sommet 3 comprenant radialement de l'intérieur à l'extérieur :

- une première nappe de sommet 30 dite de triangulation et formée de câbles métalliques en acier,
- une première nappe de sommet de travail 31 formée de câbles métalliques en acier, puis
- une deuxième nappe de sommet de travail 32 formée de câbles métalliques en acier identiques à ceux de la première nappe sommet de travail 31; et
- radialement intercalées entre les extrémités des nappes de sommet de travail 31, 32 une gomme de bordure P, comprenant au moins une composition selon l'invention et telle que décrite ci-dessus, qui s'étend en partie parallèlement à la nappe 2, et une gomme de découplage B comprenant au moins une composition selon l'invention telle que décrite ci-dessus, recouvrant l'extrémité de ladite nappe de travail 30.

Sur la figure 2, on a représenté une vue en coupe d'un produit renforcé selon l'invention, désignée par la référence générale 33 formant une nappe renforcée, en particulier une nappe de travail du pneumatique de la figure 1. La nappe renforcée 33 comprend des éléments de renfort 34, par exemple des monofilaments en acier 35 revêtus au moins en partie par un revêtement métallique, noyés dans la composition de caoutchouc 36 telle que décrite ci-dessus.

## 5. EXEMPLES

### 5.1 Mesure de la note Z

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345-2006.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\% \text{ surface non dispersée}) / 0{,}35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus est la note Z haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

## 5.2 Mesure de l'énergie de rupture.

L'énergie de rupture est mesurée à 100°C sur une éprouvette étirée à 500 mm/min pour provoquer la rupture d'une éprouvette de traction. Cette éprouvette est constituée par une plaque de caoutchouc de forme parallélépipédique de dimensions 10 x 145 x 2,5 mm dans laquelle 3 entailles de 3 mm de long sur une profondeur de 5 mm sont réalisées à l'aide d'une lame de rasoir, à mi-hauteur et distantes de 6 mm parallèles à la largeur de l'éprouvette, avant le démarrage du test. On détermine la force (N/mm) à exercer pour obtenir la rupture (FRD en N/mm) et on mesure la déformation à la rupture (DRD, en %). Ainsi, on peut déterminer l'énergie pour provoquer la rupture (énergie de rupture) de l'éprouvette qui est le produit du FRD et DRD. L'énergie de rupture est un descripteur de la cohésion du matériau. Plus la valeur de l'énergie de rupture est élevée, meilleure est la cohésion de la composition de caoutchouc. Pour plus de lisibilité les résultats seront indiqués en base 100, la valeur 100 étant attribuée arbitrairement au témoin. Un résultat inférieur à 100 indique une diminution de la performance de cohésion du mélange, et inversement, un résultat supérieur à 100, indique une augmentation de cette performance.

## 5.3 Propriétés dynamiques.

Les propriétés dynamiques, et en particulier tan $(\delta)$max, sont mesurées sur un viscoanalyseur (Metravib VA4000), selon la norme ASTM D 5992-96. On enregistre la réponse d'un échantillon de composition vulcanisée (éprouvette cylindrique de 2,8 mm d'épaisseur et de 400 mm$^2$ de section), soumis à une sollicitation sinusoïdale en cisaillement simple alterné, à la fréquence de 10 Hz et à la température de 100°C. On effectue un balayage en amplitude de déformation de 0,1 à 100 % crête-crête (cycle aller), puis de 100 % à 0,1% crête-crête (cycle retour). Les résultats exploités sont le facteur de perte (tan $\delta$). Pour le cycle retour, on indique la valeur maximale de tan $\delta$ observée, noté tan$(\delta)_{\text{max à } 100°C}$.

Les résultats tan$(\delta)_{\text{max à } 100°C}$ sont indiqués en base 100 et sont obtenus de la manière suivante : on calcule en base 100 le résultat tan$(\delta)_{\text{max à } 100°C}$ obtenu pour un échantillon à tester en attribuant la valeur arbitraire 100 au témoin :Résultat tan$(\delta)_{\text{max à } 100°C}$ (base 100) = (valeur de tan$(\delta)_{\text{max à } 100°C}$ de l'échantillon à tester $\times$ 100) / (valeur de tan$(\delta)_{\text{max à } 100°C}$ du témoin). De cette façon, un résultat inférieur à 100 indique une diminution de l'hystérèse (ce qui est favorable pour la résistance au roulement).

## 5.4 Test de résistance à la propagation de fissure

La vitesse de fissuration (VP) a été mesurée sur des éprouvettes de compositions de caoutchouc à l'aide d'une machine de fatigue cyclique (« Elastomer Test System ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5mm) permettant l'ancrage dans les mors de la machine de traction. Les éprouvettes ainsi préparées sont testées à l'état neuf. Le test a été conduit sous azote, à une température de 100°C. Après accommodations, 3 entailles très fines de longueurs comprises entre 15 et 20 mm sont réalisées à l'aide d'une lame de rasoir, à milargeur et alignées dans le sens de la longueur de l'éprouvette, une à chaque extrémité et une au centre de l'éprouvette, avant le démarrage du test. À chaque cycle de traction, le taux de déformation de l'éprouvette est ajusté automatiquement de manière à maintenir constant le taux de restitution d'énergie (quantité d'énergie libérée lors de la progression de la fissure) à une valeur inférieure ou égale 3000 à J/m$^2$. La vitesse de la propagation de fissure est mesurée en nanomètre par cycle. La résistance à la propagation de fissure sera exprimée en unités relatives (u.r.) en divisant la vitesse de propagation du témoin par celle de l'échantillon à analyser, les vitesses étant mesurées au même taux de restitution d'énergie. Une valeur inférieure à celle du témoin, arbitrairement fixée à 100, indique un résultat amélioré c'est-à-dire une résistance à la propagation de la fissure améliorée.

**5.5. Test d'adhésion**

La qualité de la liaison entre la composition de caoutchouc et les éléments de renfort est appréciée par un test d'adhésion dans lequel on mesure la force nécessaire pour extraire ces éléments de renfort d'une composition de caoutchouc vulcanisée en utilisant des éprouvettes d'adhésion.

Pour fabriquer les éprouvettes d'adhésion, on utilise 15 éléments de renfort identiques, l'élément de renfort étant un câble formé par 11 fils d'acier de diamètre 35 mm revêtus de laiton. On confectionne un bloc de caoutchouc constitué de deux plaques crues de dimension 200 mm par 12,5 mm et d'épaisseur 7 mm, appliquées l'une sur l'autre avant cuisson (l'épaisseur du bloc résultant est d'alors 14 mm). Les deux plaques du bloc de caoutchouc consistent en la même composition de caoutchouc. C'est lors de la confection du bloc que les éléments de renfort (15 au total) sont emprisonnés entre les deux plaques du bloc de caoutchouc à l'état cru, à égale distance et en laissant dépasser de part et d'autres de ces plaques une extrémité de l'élément de renfort de longueur suffisante pour la traction ultérieure. Le bloc comportant les éléments de renfort est placé dans un moule adapté puis cuit à 110°C pendant 480 min sous pression de 15 bars (force de serrage plateau = 30kN). A l'issue de la cuisson, l'éprouvette ainsi constituée du bloc vulcanisé et des 15 fils d'acier est mise en place dans les mâchoires d'une machine de traction (Intron Série 5000) pour permettre de tester chaque fil d'acier à une vitesse de 100 mm/min et à une température de 23°C.

On caractérise les niveaux d'adhésion en mesurant la force dite d'arrachage en N/mm$^2$ (noté $F_{max}$) pour arracher les éléments de renfort de l'éprouvette. Une valeur supérieure à celle de l'éprouvette témoin, arbitrairement fixée à 100, indique un résultat amélioré, c'est-à-dire une force d'arrachage supérieure à celle de l'éprouvette témoin.

**5.6** : **Essai**

Cet exemple a pour but de démontrer l'amélioration du compromis de propriétés résistance au roulement/cohésion/résistance à la vitesse de fissuration/adhésion d'une composition de caoutchouc utilisée dans un produit renforcé selon l'invention par rapport à des compositions de caoutchouc utilisées dans des produits renforcés témoins.

Pour cela, on prépare les cinq compositions de caoutchouc suivantes :

- la composition témoin T1 est une composition classiquement utilisée et commercialisée pour enrober des éléments de renfort en acier. Elle représente donc un compromis en performance de résistance au roulement/cohésion/résistance à la vitesse de fissuration/adhésion pour des éléments de renfort et des produits renforcés commercialisés ; elle est à base de caoutchouc naturel, de noir de carbone, d'un sel de cobalt et de soufre. Elle est préparée par mélangeage en voie masse ;
- la composition T2, non conforme à l'invention, diffère de la composition T1 en ce qu'elle comprend en outre une charge inorganique renforçante et une résine plastifiante ayant une température de transition vitreuse supérieure à 20°C;
- la composition T3, non conforme à l'invention, diffère de la composition T1 qu'elle est produite à partir d'un mélange maître obtenu par mélangeage liquide;
- la composition T4, non conforme à l'invention, diffère de la composition T3 en ce qu'elle comprend en outre une résine plastifiante ayant une température de transition vitreuse supérieure à 20°C;
- la composition T5, non conforme à l'invention, diffère de la composition T3 en ce qu'elle comprend en outre une charge inorganique renforçante;
- la composition C1, conforme à l'invention, diffère de la composition T3 en ce qu'elle comprend en outre une charge inorganique renforçante et une résine plastifiante ayant une température de transition vitreuse supérieure à 20°C.

La formulation de ces compositions est donnée dans le tableau 1 ; le taux des différents produits est exprimé en pce (parties en poids pour cent parties en poids d'élastomère).

[Table 1]

| Compositions | T1 | T2 | T3 | T4 | T5 | C1 |
|---|---|---|---|---|---|---|
| Élastomère (1) | 100 | 100 | (-) | (-) | (-) | (-) |
| Noir de carbone (2) | 50 | 50 | (-) | (-) | (-) | (-) |
| Mélange maître (3) | (-) | (-) | 150 | 150 | 150 | 150 |
| Charge inorganique renforçante (4) | (-) | 6 | (-) | (-) | 6 | 6 |
| Agent de couplage (5) | (-) | 0,85 | (-) | (-) | 0,85 | 0,85 |
| Résine plastifiante (6) | (-) | 6 | (-) | 6 | (-) | 6 |

(suite)

| Compositions | T1 | T2 | T3 | T4 | T5 | C1 |
|---|---|---|---|---|---|---|
| Anti-oxydant | 2 | 2 | 2 | 2 | 2 | 2 |
| Oxyde de zinc (7) | 7,5 | 7,5 | 7,5 | 7,5 | 7,5 | 7,5 |
| Acide stéarique (8) | 0,9 | 0,9 | 0,9 | 0,9 | 0,9 | 0,9 |
| Soufre | 5 | 5 | 5 | 5 | 5 | 5 |
| Accélérateur (9) | 0,6 | 0,6 | 0,6 | 0,6 | 0,6 | 0,6 |
| Sel de cobalt (10) | 1,12 | 1,12 | 1,12 | 1,12 | 1,12 | 1,12 |

(1) : Caoutchouc naturel ;

(2) : Noir de carbone de grade ASTM N347 (société Cabot) de surface spécifique BET égale à 90 m$^2$/g, d'indice COAN 100 g/100 ml, la surface BET et l'indice COAN sont mesurés selon les méthodes décrites ci-dessus ;

(3) : Mélange-maître : 100 pce de caoutchouc naturel et 50 pce de noir de carbone de grade ASTM N347 (société Cabot), le mélange maître est obtenu par mélangeage en phase liquide selon le procédé décrit dans le document US6929783 et ci-après et à partir d'un latex de caoutchouc naturel et d'une dispersion aqueuse dudit noir de carbone ;

(4) : Silice « Zeosil 1165MP » commercialisée par la société Solvay ; la surface spécifique BET, mesurée selon la méthode décrite dans la description, de cette silice est égale à 160 m$^2$/g ;

(5) : Bis[3-(triéthoxysilyl)propyl] Tetrasulfide silane (TESPT) commercialisé par Evonik sous la référence « Si69 » ;

(6) : Résine plastifiante : Coupe C5/C9 commercialisée par Exxon Mobil sous la référence « Escorez 2173 », dont Tg = 40°C mesurée selon la méthode décrite ci-dessus, la température de ramollissement mesurée selon la norme ASTM D3461-2014 est de 90°C, de Mn = 940 g/mol et d'Ip = 1,7 mesurés selon la méthode décrite ci-dessus, (7) : Oxyde de zinc de grade industriel - société Umicore ;

(8) : Stéarine « Pristerene 4931 » de la société Uniqema ;

(9) : N-ter-butyl-2-benzothiazyle sulfenamide (« Santocure TBBS » de la société Flexsys) (10) : Naphténate de cobalt « N°produit 60630 » de la société Fluka.

Fabrication des compositions

Composition T1 et T2:

Pour la fabrication des compositions T1 et T2, on procède de la manière suivante: on introduit dans un mélangeur interne, dont la température initiale de cuve est d'environ 50°C, successivement la charge renforçante (noir de carbone) et éventuellement la charge inorganique renforçante lorsqu'elle est présente, le caoutchouc naturel, ainsi que les divers autres ingrédients, tels que la résine plastifiante lorsqu'elle est présente, à l'exception du système de réticulation ; le mélangeur est ainsi rempli à environ 70 % en volume. On conduit alors un travail thermomécanique (phase non-productive) en une étape d'environ 3 à 5 min, jusqu'à atteindre une température maximale de « tombée » de 160°C. On récupère le mélange ainsi obtenu, on le refroidit puis on l'incorpore le soufre et l'accélérateur de vulcanisation sur un mélangeur externe (homo-finisseur) à 40°C, en mélangeant le tout (phase productive) pendant quelques minutes.

Compositions T3 à T5 et C1

Pour les compositions T3 à T5 et C1, on procède tout d'abord à la fabrication du mélange-maître de la manière suivante selon le procédé décrit dans le document US6929783. Plus particulièrement, une dispersion aqueuse de noir de carbone N347 à une concentration massique de 14,5 % est injectée à un débit de 2512 kg/h dans la zone de mélange d'un réacteur de coagulation telle que décrite dans le document US6929783 où elle est mélangée avec le latex de caoutchouc naturel qui est un latex de champ ayant une concentration massique de 28 % (latex champs= latex field) et qui arrive à un débit de 2580 kg/h dans ladite zone de mélange. Les deux dispersions coagulent dans ce dispositif et forment un coagulum. Le coagulum obtenu est ensuite essoré, séché et mastiqué selon le procédé décrit dans le brevet US6929783 et on obtient le mélange-maître d'élastomère/noir de carbone qui contient 100 pce de caoutchouc naturel et 50 pce de noir de carbone N347.

On introduit, ensuite, dans un mélangeur interne type Banbury (taux de remplissage final : environ 70 % en volume), dont la température initiale de cuve est d'environ 50°C, successivement le mélange-maître obtenu à l'étape précédente, le cas échéant la résine plastifiante et/ou la charge inorganique renforçante minoritaire ainsi que les divers autres ingrédients à l'exception du système de réticulation ; le mélangeur est ainsi rempli à environ 70 % en volume. On conduit alors un travail thermomécanique (phase non-productive) en une étape d'environ 3 à 5 min, jusqu'à atteindre une température maximale de « tombée » de 160°C.

On récupère le mélange ainsi obtenu, on le refroidit puis on incorpore le système de réticulation sur un mélangeur externe (homo-finisseur) à 30°C, en mélangeant le tout (phase productive) pendant quelques minutes.

Propriétés de caoutchouterie

Les compositions T1 à T5 et C1 ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé. Pour la fabrication des produits renforcés, on procède de manière bien connue de l'homme du métier, par calandrage des renforts métalliques entre deux couches de composition de caoutchouc à l'état cru (non vulcanisé) ayant chacune une épaisseur voulue pour la fabrication des éprouvettes (voir ci-avant).

Pour les mesures d'énergie de rupture, les propriétés dynamiques et la résistance à la propagation de fissure, les échantillons ainsi produits ont été cuits pendant 360 min à 115°C dans une presse à cloche.

Les propriétés de ces différentes compositions et des produits renforcés ont été évalués et sont présentés dans le tableau 2 ci-dessous.

[Table 2]

| Compositions | T1 | T2 | T3 | T4 | T5 | C1 |
|---|---|---|---|---|---|---|
| Note Z | 87 | 78 | 94 | 95 | 90 | 92 |
| Tan($\delta$) max à 100°C (base 100) | 100 | 103 | 78 | 74 | 92 | 91 |
| Énergie de rupture à 100°C (base 100) | 100 | 268 | 100 | 191 | 163 | 215 |
| Résistance à la vitesse de fissuration (base 100) | 100 | 81 | 97 | 94 | 80 | 38 |
| Test d'adhésion sur le produit renforcé | | | | | | |
| Fmax à 20°C après refroidissement après la cuisson (base 100) | 100 | 91 | 81 | 93 | 72 | 100 |

On constate d'après le tableau 2, que lorsqu'une charge inorganique renforçante et une résine plastifiante sont ajoutées à la composition témoin T1 pour obtenir la composition T2 non conforme, le compromis résistance au roulement/cohésion/résistance à la vitesse de fissuration/adhésion n'est pas amélioré (comparaison compositions T1 et T2). En effet, bien que l'énergie de rupture et la résistance à la vitesse de fissuration soient significativement améliorées, ces améliorations s'effectuent au détriment de l'hystérèse ($\text{Tan}(\delta)_{\text{max à }100°C}$) (donc de la résistance au roulement) et des propriétés d'adhésion ($F_{\text{max}}$ diminué).

Lorsque le caoutchouc naturel, sous forme de latex, et le noir de carbone, sous forme d'une dispersion aqueuse sont mélangés par mélangeage par voie liquide pour l'obtention de la composition T3, on constate par comparaison à la composition T1, que ni la cohésion de la composition de caoutchouc (énergie de rupture), ni l'adhésion de la composition, sur les éléments de renfort en acier n'ont été améliorées. Le compromis de propriétés n'est donc pas atteint.

Lorsqu'on ajoute une résine plastifiante à la composition non conforme à l'invention T3 pour obtenir la composition non conforme à l'invention T4, on constate une amélioration de l'hystérèse, de la cohésion de la composition, ainsi que de la résistance à la vitesse de fissuration de la composition T4 par rapport à la composition T3 ainsi qu'une légère amélioration des propriétés d'adhésion mais sans toutefois atteindre pour cette propriété les valeurs de la composition témoin T1. Le compromis de propriétés n'est donc également pas atteint pour la composition T4.

Lorsqu'on ajoute une silice à la composition non conforme à l'invention T3 pour obtenir la composition non conforme à l'invention T5, on constate une amélioration de la cohésion de la composition T5 par rapport à la cohésion de la composition T3, ainsi qu'une amélioration de la résistance à la vitesse de fissuration par rapport à la composition T3, mais aussi par rapport à la composition T1. On observe, en revanche, une diminution importante des propriétés d'adhésion de la composition T5. Le compromis de propriété n'est donc également pas atteint pour la composition T5.

De manière surprenante, lorsqu'on ajoute une silice et une résine plastifiante haute Tg à la composition T3 pour obtenir la composition C1 selon l'invention, on observe une amélioration significative des propriétés de cohésion, de résistance à la vitesse de fissuration et d'adhésion par rapport à la composition témoin T3, mais aussi par rapport aux compositions T4 et T5 non conformes. La composition C1 selon l'invention présente également des propriétés d'hystérèse, de cohésion et de résistance à la vitesse de fissuration significativement améliorées par rapport à la composition témoin T1 tout en conservant les propriétés d'adhésion équivalente à celles de la composition T1. Le compromis de propriétés roulement/cohésion/résistance à la vitesse de fissuration/adhésion est donc amélioré pour la composition C1 selon l'invention. De manière surprenante, la composition C1 selon l'invention présente les meilleures propriétés de résistance à la fissuration de toutes les compositions T1 à T5 non conformes testées.

**Revendications**

1. Composition de caoutchouc à base d'au moins une matrice élastomérique comprenant au moins un élastomère diénique, au moins une charge renforçante comprenant majoritairement du noir de carbone et au moins une charge inorganique renforçante, au moins une résine plastifiante ayant une température de transition vitreuse supérieure ou égale à 20°C mesurée selon la norme ASTM D3418 (1999), au moins un sel de cobalt et au moins un système de vulcanisation, ladite composition de caoutchouc présentant une note Z de dispersion de la charge renforçante dans la matrice élastomérique supérieure ou égale à 85, la note Z étant mesurée selon la méthode décrite au paragraphe 5.1.

2. Une composition de caoutchouc selon la revendication 1, dans laquelle, le noir de carbone présente un indice d'absorption d'huile d'échantillons comprimés, mesuré selon la norme ASTM D3493-2016, supérieur ou égal à 60 ml/100 g, de préférence compris dans un domaine allant de 65 à 130 ml/100 g.

3. Une composition de caoutchouc renforcé selon l'une quelconque des revendications 1 ou 2, dans laquelle le noir de carbone présente une surface spécifique BET, mesurée selon la norme-D6556-2010, supérieure ou égale à 30 m$^2$/g ; de préférence supérieure ou égale à 60 m$^2$/g, plus préférentiellement encore comprise dans un domaine allant de 60 à 150 m$^2$/g.

4. Une composition de caoutchouc selon l'une quelconque des revendications précédentes, dans laquelle le taux de noir de carbone est compris dans un domaine allant de 10 à 80 pce, de préférence de 30 à 70 pce, encore plus préférentiellement de 35 à 65 pce.

5. Une composition de caoutchouc selon l'une quelconque des revendications précédentes, dans laquelle le taux de charge inorganique renforçante est inférieur ou égal à 50 pce, de préférence est compris dans un domaine allant de 0,5 pce à 50 pce, plus préférentiellement encore est compris dans un domaine allant de 2 à 40 pce, plus préférentiellement encore de 4 à 25 pce.

6. Une composition de caoutchouc selon l'une quelconque des revendications précédentes, dans laquelle la charge inorganique renforçante comprend une silice, plus préférentiellement consiste en de la silice.

7. Une composition de caoutchouc selon l'une quelconque des revendications précédentes, dans laquelle la résine plastifiante est choisie dans le groupe constitué par les résines aliphatiques, les résines aromatiques, les résines type aliphatique/aromatique et les mélanges de ces résines plastifiantes.

8. Une composition de caoutchouc selon l'une quelconque des revendications précédentes, dans laquelle le taux de résine plastifiante est compris dans un domaine allant de 0,5 à 20 pce, de préférence de 2 à 12 pce, plus préférentiellement encore de 3 à 10 pce.

9. Une composition de caoutchouc selon l'une quelconque des revendications précédentes, dans laquelle la composition de caoutchouc est obtenue à partir d'un mélange maître dudit élastomère diénique et dudit noir de carbone.

10. Une composition de caoutchouc selon la revendication 9, dans laquelle le mélange maître est obtenu par mélangeage en phase liquide à partir d'un latex d'élastomère diénique et d'une dispersion aqueuse de noir de carbone.

11. Une composition de caoutchouc selon la revendication 10, dans laquelle le mélange maître est obtenu selon les étapes de procédés suivantes :

    - alimenter un flux continu d'un latex d'élastomère diénique jusqu'à une zone de mélange d'un réacteur de coagulation définissant une zone allongée de coagulation s'étendant entre la zone de mélange et une sortie,
    - alimenter un flux continu d'un fluide comprenant une charge sous pression dans la zone de mélange d'un réacteur de coagulation pour former un mélange coagulé,
    - sécher le mélange coagulé obtenu précédemment afin de récupérer le mélange maître.

12. Produit renforcé comprenant au moins un élément de renfort en acier revêtu au moins en partie par un revêtement métallique et une composition de caoutchouc telle que définie à l'une quelconque des revendications 1 à 11, ledit élément de renfort étant noyé dans ladite composition de caoutchouc.

13. Produit renforcé selon la revendication précédente, dans lequel le métal du revêtement métallique de l'élément de renfort est choisi parmi le zinc, le cuivre, l'étain, le cobalt et les alliages de ces métaux.

14. Pneumatique comprenant au moins une composition de caoutchouc selon l'une quelconque des revendications 1 à 11.

15. Pneumatique comprenant au moins un produit renforcé tel que défini aux revendications 12 ou 13.


**Patentansprüche**

1. Kautschukzusammensetzung auf Basis von mindestens einer Elastomermatrix, die mindestens ein Dienelastomer umfasst, mindestens einem verstärkenden Füllstoff, der hauptsächlich Ruß und mindestens einen verstärkenden anorganischen Füllstoff umfasst, mindestens einem Weichmacherharz mit einer Glasübergangstemperatur größer oder gleich 20 °C, gemessen gemäß ASTM-Norm D3418 (1999), mindestens einem Cobaltsalz und mindestens einem Vulkanisationssystem, wobei die Kautschukzusammensetzung einen Z-Wert der Dispersion des verstärkenden Füllstoffs in der Elastomermatrix größer oder gleich 85 aufweist, wobei der Z-Wert gemäß der in Absatz 5.1 beschriebenen Methode gemessen wird.

2. Kautschukzusammensetzung nach Anspruch 1, wobei der Ruß eine Ölabsorptionszahl komprimierter Proben, gemessen gemäß der ASTM-Norm D3493-2016, größer oder gleich 60 ml/100 g, vorzugsweise in einem Bereich von 65 bis 130 ml/100 g, aufweist.

3. Verstärkte Kautschukzusammensetzung nach Anspruch 1 oder 2, wobei der Ruß eine spezifische BET-Oberfläche, gemessen gemäß der Norm D6556-2010, größer oder gleich 30 m$^2$/g, vorzugsweise größer oder gleich 60 m$^2$/g, noch weiter bevorzugt in einem Bereich von 60 bis 150 m$^2$/g, aufweist.

4. Kautschukzusammensetzung nach einem der vorhergehenden Ansprüche, wobei der Gehalt an Ruß in einem Bereich von 10 bis 80 phe, vorzugsweise von 30 bis 70 phe, noch weiter bevorzugt von 35 bis 65 phe, liegt.

5. Kautschukzusammensetzung nach einem der vorhergehenden Ansprüche, wobei der Gehalt an verstärkendem anorganischem Füllstoff kleiner oder gleich 50 phe ist und vorzugsweise in einem Bereich von 0,5 phe bis 50 phe, noch weiter bevorzugt in einem Bereich von 2 bis 40 phe, noch weiter bevorzugt von 4 bis 25 phe, liegt.

6. Kautschukzusammensetzung nach einem der vorhergehenden Ansprüche, wobei der verstärkende anorganische Füllstoff eine Kieselsäure umfasst und weiter bevorzugt aus Kieselsäure besteht.

7. Kautschukzusammensetzung nach einem der vorhergehenden Ansprüche, wobei das Weichmacherharz aus der Gruppe bestehend aus aliphatischen Harzen, aromatischen Harzen, aliphatisch-aromatischen Harzen und Mischungen dieser Weichmacherharze ausgewählt ist.

8. Kautschukzusammensetzung nach einem der vorhergehenden Ansprüche, wobei der Gehalt an Weichmacherharz in einem Bereich von 0,5 bis 20 phe, vorzugsweise von 2 bis 12 phe, noch weiter bevorzugt von 3 bis 10 phe, liegt.

9. Kautschukzusammensetzung nach einem der vorhergehenden Ansprüche, wobei die Kautschukzusammensetzung aus einem Masterbatch des Dienelastomers und des Rußes erhalten wird.

10. Kautschukzusammensetzung nach Anspruch 9, wobei der Masterbatch durch Flüssigphasenmischen ausgehend von einem Dienelastomerlatex und einer wässrigen Dispersion von Ruß erhalten wird.

11. Kautschukzusammensetzung nach Anspruch 10, wobei der Masterbatch durch folgende Verfahrensschritte erhalten wird:

    - Zuführen eines kontinuierlichen Stroms eines Dienelastomerlatex zu einer Mischzone eines Koagulationsreaktors, der eine langgestreckte Koagulationszone definiert, die sich zwischen der Mischzone und einem Auslass erstreckt,
    - Zuführen eines kontinuierlichen Stroms eines Fluids, das einen Füllstoff umfasst, unter Druck zu der Mischzone eines Koagulationsreaktors unter Bildung einer koagulierten Mischung;
    - Trocknen der oben erhaltenen koagulierten Mischung zur Gewinnung des Masterbatch.

**12.** Verstärktes Produkt, umfassend mindestens ein Verstärkungselement aus Stahl, das zumindest teilweise mit einer metallischen Beschichtung beschichtet ist, und eine Kautschukzusammensetzung gemäß einem der Ansprüche 1 bis 11, wobei das Verstärkungselement in die Kautschukzusammensetzung eingebettet ist.

**13.** Verstärktes Produkt nach dem vorhergehenden Anspruch, wobei das Metall der metallischen Beschichtung des Verstärkungselements aus Zink, Kupfer, Zinn, Cobalt und den Legierungen dieser Metalle ausgewählt ist.

**14.** Reifen, umfassend mindestens eine Zusammensetzung nach einem der Ansprüche 1 bis 11.

**15.** Reifen, umfassend mindestens ein verstärktes Produkt gemäß Anspruch 12 oder 13.


**Claims**

**1.** Rubber composition based on at least one elastomeric matrix comprising at least one diene elastomer, at least one reinforcing filler predominantly comprising carbon black and at least one reinforcing inorganic filler, at least one plasticizing resin having a glass transition temperature being measured according to the standard ASTM D3418 (1999) of greater than or equal to 20°C, at least one cobalt salt and at least one vulcanization system, said rubber composition exhibiting a Z score for dispersion of the reinforcing filler in the elastomeric matrix of greater than or equal to 85, the Z score being measured according to the method described into the paragraph 5.1.

**2.** Rubber composition according to Claim 1, in which the carbon black exhibits a compressed oil absorption number measured according to the standard ASTM D3493-2016 of greater than or equal to 60 ml/100 g, preferably within a range extending from 65 to 130 ml/100 g.

**3.** Reinforced rubber composition according to either one of Claims 1 and 2, in which the carbon black exhibits a BET specific surface measured according to the standard ASTM D6556-2010 of greater than or equal to 30 m$^2$/g, preferably of greater than or equal to 60 m$^2$/g, more preferentially still within a range extending from 60 to 150 m$^2$/g.

**4.** Rubber composition according to any one of the preceding claims, in which the content of carbon black is within a range extending from 10 to 80 phr, preferably from 30 to 70 phr, more preferentially still from 35 to 65 phr.

**5.** Rubber composition according to any one of the preceding claims, in which the content of reinforcing inorganic filler is less than or equal to 50 phr, preferably is within a range extending from 0.5 phr to 50 phr, more preferentially still is within a range extending from 2 to 40 phr, more preferentially still from 4 to 25 phr.

**6.** Rubber composition according to any one of the preceding claims, in which the reinforcing inorganic filler comprises a silica, more preferentially consists of silica.

**7.** Rubber composition according to any one of the preceding claims, in which the plasticizing resin is selected from the group consisting of aliphatic resins, aromatic resins, resins of aliphatic/aromatic type and the mixtures of these plasticizing resins.

**8.** Rubber composition according to any one of the preceding claims, in which the content of plasticizing resin is within a range extending from 0.5 to 20 phr, preferably from 2 to 12 phr, more preferentially still from 3 to 10 phr.

**9.** Rubber composition according to any one of the preceding claims, in which the rubber composition is obtained from a masterbatch of said diene elastomer and of said carbon black.

**10.** Rubber composition according to Claim 9, in which the masterbatch is obtained by liquid-phase compounding starting from a diene elastomer latex and from an aqueous dispersion of carbon black.

**11.** Rubber composition according to Claim 10, in which the masterbatch is obtained according to the following process stages:

- feeding a continuous stream of a diene elastomer latex to a mixing region of a coagulation reactor defining an elongated coagulation region extending between the mixing region and an outlet,
- feeding a continuous stream of a fluid comprising a filler under pressure to the mixing region of a coagulation reactor in order to form a coagulated mixture,
- drying the coagulated mixture obtained above in order to recover the masterbatch.

12. Reinforced product comprising at least one steel reinforcing element coated at least in part with a metallic coating and a rubber composition as defined in any one of Claims 1 to 11, said reinforcing element being embedded in said rubber composition.

13. Reinforced product according to the preceding claim, in which the metal of the metallic coating of the reinforcing element is chosen from zinc, copper, tin, cobalt and the alloys of these metals.

14. Tyre comprising at least one rubber composition according to any one of Claims 1 to 11.

15. Tyre comprising at least one reinforced product as defined in Claim 12 or Claim 13.

**[Fig 1]**

**[Fig 2]**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 11042507 A
- WO 03016215 A1
- WO 03016387 A1
- US 6929783 B2
- US 6929783 B

**Littérature non-brevet citée dans la description**

- **BRUNAUER** ; **EMMETT** ; **TELLER**. *The Journal of the American Chemical Society*, February 1938, vol. 60, 309
- **R. MILDENBERG** ; **M. ZANDER** ; **G. COLLIN**. Hydrocarbon Resins. VCH, 1997
- Latex concentrates : properties and composition. **K.F. GASELEY** ; **A.D.T. GORDON** ; **T.D. PENDLE** ; **A.D. ROBERTS**. Naturel Rubber Science and Technology. Oxford University Press, 1988
- **S. OTTO et al.** *Kautschuk Gummi Kunststoffe*, 2005 (7-8)